(19) Europäisches Patentamt
European Patent Office
Office européen des brevets

(11) Numéro de publication: **0 224 392**
**B1**

(12) **FASCICULE DE BREVET EUROPEEN**

(45) Date de publication du fascicule du brevet: **12.09.90**

(51) Int. Cl.[5]: **C 08 G 18/60**, C 08 G 73/14, C 08 G 69/18, C 10 M 149/18

(21) Numéro de dépôt: **86402084.7**

(22) Date de dépôt: **23.09.86**

# (54) Poudres de polyamide-imides procédé de fabrication et utilisation.

(30) Priorité: **08.10.85 FR 8514874**

(43) Date de publication de la demande:
**03.06.87 Bulletin 87/23**

(45) Mention de la délivrance du brevet:
**12.09.90 Bulletin 90/37**

(84) Etats contractants désignés:
**AT BE DE FR GB IT NL SE**

(56) Documents cités:
**DE-B-1 594 456**
**US-A-3 484 415**
**US-A-3 879 354**

(73) Titulaire: **ATOCHEM**
**4 & 8, Cours Michelet La Défense 10**
**F-92800 Puteaux (FR)**

(72) Inventeur: **Vo Dinh, Man**
**Domaine de Maubuisson**
**F-27470 Serquigny (FR)**
Inventeur: **Merval, Jean-Paul**
**3, Rue de Valleville**
**F-27300 Brionne (FR)**

(74) Mandataire: **Foiret, Claude et al**
**ATOCHEM Département Propriété Industrielle**
**F-92091 Paris la Défense 10 Cédex 42 (FR)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention a pour objet des poudres de polyamideimides infusibles, dont les grains très fins ont une forme sphéroïdale.

Par polyamide-imides, nous entendons les polymères infusibles, (parce que possédant un réseau tridimensionnel) résultant de la réaction des polyisocyanates sur des polyamides ou copolyamides de poids moléculaire égal ou supérieur à 200.

Certains de ces polyamide-imides ont déjà été décrits. Voir notamment le Patentschrift No. 750 427 publié en Allemagne le 25 mai 1944.

On ne peut utiliser pour fabriquer de telles poudres de polyamide-imides les méthodes classiques de fabrication des poudres de polyamides.

Celles faisant appel à la dissolution et à la précipitation par un non solvant ou par abaissement de température sont inopérantes puisque ces polyamide-imides, du fait de leur réseau tridimensionnel, sont insolubles dans les solvants.

On ne peut non plus obtenir de telles poudres par transformation chimique de poudres de polyamides très fines, de forme sphéroïdale (par exemple, celles obtenues dans la demande de brevet EP—A—192515 au nom de la demanderesse) car si, par exemple, on faisait réagir sur elles un polyisocyanate à températures modérées, il n'y aurait transformation en polyamide-imide que superficiellement et, à la fusion, il y aurait destruction de la forme sphéroïdale.

Par ailleurs, le broyage, soit à la température ordinaire, soit cryogénique, de morceaux de polyamide-imide conduit à une poudre grossière dont les morceaux irréguliers ont la forme d'éclats alors que les poudres que nous revendiquons ont une forme très régulière; elles sont, en effet, constituées de grains très fins, de forme sphéroïdale dont le diamètre moyen est compris entre 2 à 40 µm.

La présente invention a également pour objet un procédé de fabrication de ces poudres de polyamide-imides infusibles, de forme régulière et de fine granulométrie.

La littérature décrit des procédés de fabrication de poudres de polyamides par polymérisation anionique de lactames en solution (Brevets français 1 601 194—1 601 195—1 602 751, demandes brevet EP—A—192515 et EP—A—196972) mais toutes les poudres ainsi obtenues sont des poudres de polyamides ou de copolyamides (et non de polyamide-imides), fusibles et solubles dans des solvants tels que le m-crésol, l'hexafluoroisopropanol.

Le procédé que nous revendiquons consiste à faire réagir sur un ou plusieurs lactames, générateures de polyamides, en solution, d'abord un catalyseur de polymérisation anionique desdits lactames, et ensuite, un polyisocyanate en quantité suffisante pour qu'il active tout d'abord ladite polymérisation et, ensuite, réagisse avec les chaînes de polyamides formées.

Ces réactions peuvent être effectuées en présence d'une charge minérale finement divisée; elles peuvent également être effectuées en présence d'une N,N'-alkylène bisamide.

Tout lactame générateur de polyamide peut-être mis en oeuvre dans l'invention; citons plus particulièrement ceux qui ont acquis une importance industrielle: le caprolactame, l'oenantholactame, le capryllactame et le lauryllactame.

Par utilisation de mélange de ces lactames, on obtient des poudres de copolyamide-imides.

Tout catalyseur de polymérisation anionique de ces lactames peut être utilisé; citrons, entre autres, le sodium, l'hydrure de sodium, le méthylate de sodium, l'amidure de sodium, les lactamates alcalins, le dioxyde de carbone.

Le polyisocyanate, mis en oeuvre, qu'il soit solide, liquide ou gazeux, doit être soluble dans le milieu réactionnel; il peut être aliphatique ou aromatique.

Ce peut être:

Le xylylène diisocyanate, l'isophorone diisocyanate, le naphtalène-1,5 diisocyanate, le diphénylméthane-4,4' diisocyanate, le triphénylméthane 4,4',4''-triisocyanate, le toluène 2,4-diisocyanate.

Conviennent particulièrement bien, l'hexaméthylène 1,6-diisocyanate et le triméthyl 2,4,4-hexaméthylène 1,6-diisocyanate.

Les isocyanates, en général, sont mentionnés dans l'art antérieur comme activateurs; mais, en fait, on n'y cite expressément que les monoisocyanates; or, ceux-ci ne peuvent pas réticuler des polyamides et, par suite, conduire à des polyamide-imides infusibles.

S'il s'agissait de polyisocyanates, en peut penser qu'ils seraient utilisés aux mêmes doses que celles indiquées pour les monoisocyanates, c'est-à-dire à des doses faibles (le nombre de groupements NCO pour 100 molécules de lactame n'excédant pas la valeur 3) et, que, dans ces conditions, aucune réticulation ne serait encore possible.

Dans la présente invention, nous n'utilisons pas n'importe quel isocyanate mais un polyisocyanate; de plus, nous l'utilisons à dose élevée, en quantité telle que le nombre de groupements NCO qu'il apporte est au minimum de 20 pour 100 molécules de lactame.

Il en résulte que ce polyisocyanate, après avoir contribué, conjointement avec le catalyseur, à la naissance et à la croissance des chaînes de polyamides ou copolyamides, réagit ensuite avec les fonctions amines libres aux extrémités de ces chaînes et, surtout, avec les fonctions amides de ces chaînes pour les ponter par formation de fonctions imides.

C'est ainsi que, dans le cas de chaînes issues de la polymérisation du lauryllactame:

$$—CONH—(CH_2)_{11}—CONH—(CH_2)_{11}—$$

en présence d'hexaméthylène diisocyanate-1,6

$$—OCN—(CH_2)_6—NCO$$

on aura le pontage suivant:

$$—(CH_2)_{11}—N—CO—(CH_2)_{11}—CONH—$$

CONH

|

$(CH_2)_6$

|

CONH

|

$$—(CH_2)_{11}—N—CO(CH_2)_{11}—CONH—$$

Le degré de pontage est d'autant plus élevé que la teneur en polyisocyanate est plus élevée; ainsi, en pratiquant des essais successifs, avec la même dose de lactame mais en augmentant à chaque essai la dose de polyisocyanate, on obtient des poudres de polymères qui, au début, sont constitués de polyamides purs, puis, petit à petit, de polyamide-imides dont la teneur en groupements imides (et, par suite, l'infusibilité) ne fait que croître au détriment des groupements amides, sans toutefois pouvoir atteindre des polyimides purs, en contenant plus un seul groupement amide, par suite d'encombrements stériques.

On peut suivre la progression de cette réaction, soit par spectro IR, soit tout simplement par une méthode empirique consistant à saupoudrer en couche mince de la poudre de polymère sur une plaque en acier 100×200×3 mm portée à 350°C par chauffage pendant 10 minutes dans un four régulé à 350°C et à observer le comportement de ces grains de poudre: s'ils donnent ou non un film, s'ils s'agglomèrent entre eux, ou collent à la plaque.

On peut également observer le comportement de cette poudre dans le méta-crésol à 80°C dans lequel seuls les polyamides purs sont solubles.

Comme dit ci-dessus, on peut éventuellement additionner le milieu réactionnel d'une charge minérale finement divisée, telle que talc, silice, de manière à introduire des germes de cristallisation, à condition que cette charge soit parfaitement anhydre.

0,1 à 1 parties en poids par rapport au lactame suffisent pour assurer cette fonction.

On peut également ajouter une N,N'-alkylène bis amide telle que, entre autres, le N,N'-éthylène bis stéaramide ou la N,N'-éthylène bis oléamide.

Le mode d'action de ces amides spéciales a été précisé dans la demande de brevet EP—A—196972 déjà citée.

Le solvant, constituant le milieu réactionnel, doit être parfaitement anhydre; il doit dissoudre le lactame et être inerte vis-à-vis des autres composés mes en oeuvre dans le procédé.

Il a un point d'ébullition compris entre 80 et 200°C; ce peut être un hydrocarbure aliphatique, de type paraffinique, par exemple, ou cyclanique ou aromatique tel que xylène ou toluène (halogéné ou non).

Les poudres de polyamide-imides infusibles ainsi obtenues ont, grâce à leurs propriétés physiques particulières, des applications très intéressantes.

Une application qui fait également l'objet de la présente invention, consiste à les utiliser comme additifs pour lubrifiants pour remplacer le graphite, le bisulfure de molybdène ou les poudres de matières thermoplastiques qui ont déjà été proposées dans ce but (brevet US—A—1 036 542 qui mentionne pour cet usage les poudres de polyamides, polyacétals, polytétrafluoréthylène).

Pour cette application très particulière, il y a intérêt à utiliser une poudre de polyamide-imide contenant une charge élevée de silice; nous avons constaté, en effet, qu'une telle poudre (obtenue en introduisant dans le milieu réactionnel des doses de silice finement dispersée, supérieures aux quelques pour mille requis pour faciliter la formation de cette poudre, comme dit plus haut) restait parfaitement en suspension dans l'huile à laquelle on l'a ajoutée—ceci étant dû (en dehors de la densité qui a été modifiée) aux qualités thixotropiques apportées par la silice.

Ce résultat est acquis par l'utilisation d'au moins 4 pour cent de silice en poids par rapport au lactame, cette silice ayant des grains de diamètre compris entre 2 et 40 millimicrons.

Dans les exemples que nous citons ci-dessous, exemples qui ont pour but d'illustrer l'invention sans toutefois la limiter, les essais de fabrication ont été réalisés dans un réacteur d'une capacité de 20 litres, muni d'un agitateur à pales, d'une double enveloppe dans laquelle circule de l'huile de chauffage, d'un système de vidange par le fond et d'un sas d'introduction des réactifs balayé à l'azote sec.

Un dispositif de distillation azéotropique sous vide permet d'éliminer toute trace d'eau du miliu réactionnel.

Le solvant utilisé est une coupe d'hydrocarbure paraffinique dont la plage d'ébullition se trouve entre 130 et 160°C.

Exemple 1

On introduit successivement dans le réacteur, sous azote, à la température ordinaire, et sous faible agitation:

13 litres de solvant

45 grammes de N,N'-éthylène bis stéaramide (EBS)

300 grammes de silice finement dispersée (aérosil R 974 de la Sté Degussa) parfaitement déshydratée.

3000 grammes de caprolactame (soit 26,54 moles).

On met en marche l'agitation à faible vitesse et chauffe progressivement jusqu'à 110°C; une fois cette température atteinte, la vitesse d'agitation est portée à 360 tours/minute et une distillation à 110°C pendant 60 minutes permet d'éliminer toute trace d'eau.

On introduit, ensuite, sous azote, 22,9 grammes d'hydrure de sodium à 50% de H Na, et le laisse réagir pendant 10 minutes avec le caprolactame.

Ayant réglé la température à 115°C, on injecte en 4 heures 900 grammes d'hexaméthylène diisocyanate (apportant 40,4 groupements NCO pour 100 moles de caprolactame) dilués dans 2 litres de solvant, toujours sous agitation de 360 tours/minute.

A la fin de l'injection, on maintient encore la température à 115°C et l'agitation à 360 tours/minute pendant 30 minutes, refroidit et essore la poudre à 100°C.

Après séchage sous vide pour éliminer toute trace de solvant, lavage dans une solution aqueuse d'acide phosphorique pour détruire les traces de catalyseur, puis séchage sous vide à 80°C, on obtient une poudre dont les grains parfaitement sphériques ont un diamètre compris entre 2 et 10 µm.

Elle est infusible au test de la plaque à 350°C et insoluble dans le m-crésol à 80°C.

Exemple 2

Le mode opératoire est identique à celui de l'exemple 1 à la différence que l'on met en jeu:

3000 grammes de lauryllactame (soit 15,23 moles)

45 gramms d'EBS

300 grammes de silice

12,6 grammes d'hydrure de sodium

517 grammes d'hexaméthylène diisocyanate soit 40,4 groupements NCO pour 100 moles de lauryllactame.

Comme dans l'exemple 1, on obtient une poudre de grains de diamètre compris entre 2 et 10 µm.

Exemple 3

a) on prépare deux dispersions dans l'huile normalisée Neutral 200, l'une contenant 3% de la poudre polyamide imide préparée suivant l'exemple 1 ci-dessus, et l'autre contenant 3% de poudre de polytétrafluoroéthylène (PTFE) commercialisée par la firme Reiner-Chemie (RFA),

b) on soumet ces deux dispersions à des essais comparatifs sur une machine bille-plan qui permet d'enregistrer le couple de frottement d'une bille sur un disque en fonction de la température, en respectant les conditions suivantes:

Disque en acier XC 38.

Rugosité du disque: 0,2 mm, mesurée par un profilomètre.

Bille: 5 mm en acier 100 $C_6$.

Vitesse de glissement: 0,15 cm/s.

Charge appliquée: 1 daN.

Montée en température: 5°C/minute.

Quantité de dispersion d'huile par essai: 0,3 g.

Arrêt de la machine à 400°C ou lors d'une augmentation rapide du coefficient de frottement.

c) le tableau ci-dessous montre que les différences de coefficients de frottement sont très faibles, et que la poudre de polyamide-imide préparée suivant l'exemple 1 est pratiquement équivalente à la poudre PTFE expérimentée.

| Dispersions soumises au test | Coefficient de frottement aux différentes températures en °C | | | | | | | |
|---|---|---|---|---|---|---|---|---|
| | 20 | 100 | 150 | 200 | 250 | 300 | 350 | 400 |
| huile Neutral 200+3% de PTFE | 0,16 | 0,16 | 0,16 | 0,16 | 0,16 | 0,16 | 0,22 | 0,28 |
| huile Neutral 200+3% de polyamide-imide | 0,18 | 0,18 | 0,18 | 0,17 | 0,17 | 0,18 | 0,22 | 0,22 |

## Revendications

1. Poudres de polyamide-imide constituées de grains infusibles, insolubles, de forme sphéroïdale dont le diamètre moyen est compris entre 2 et 40 µm, et résultant de la réaction, au cours de la polymérisation anionique d'au moins un lactame, de polyamide ou de copolyamide de poids moléculaire égal ou supérieur à 200 et de polyisocyanate en quantité telle que le nombre de groupements NCO apporté est au minimum de 20 pour 100 molécules de lactame.

2. Procédé de fabrication des poudres selon la revendication 1 consistant à polymériser anioniquement du lactame en solution en présence de catalyseur de polymérisation et de polyisocyanate, caractérisé en ce qu'en cours de polymérisation d'au moins un lactame, le polyisocyanate qui réagit sur le polyamide ou le copolyamide formé de poids moléculaire égal ou supérieur à 200, est en quantité telle que le nombre de groupements NCO apporté est au minimum de 20 pour 100 molécules de lactame.

3. Procédé selon la revendication 2 caractérisé en ce que la solution de lactame est additionnée d'une charge minérale finement divisée.

4. Procédé selon la revendication 3 caractérisé en ce que la solution de lactame est additionnée d'une charge minérale à raison de 0,1 à 1 partie en poids pour 100 de lactame.

5. Procédé selon la revendication 4 caractérisé en ce que la solution de lactame est additionnée de silice micronisée à raison d'au moins 4 parties en poids pour 100 de lactame.

6. Procédé selon l'une des revendications 2 à 5 caractérisé en ce que la solution de lactame est additionnée d'une N,N'-alkylène bis amide.

7. Procédé selon l'une des revendications 2 à 6 caractérisé en ce que le polyisocyanate est choisi dans le groupe comprenant l'hexaméthylène 1,6-diisocyanate et le triméthyl 2,4,4-hexaméthylène 1,6-diisocyanate.

8. Procédé selon l'une des revendications 2 à 7 caractérisé en ce que le ou les lactames sont choisis dans le groupe comprenant le caprolactame et le lauryllactame.

9. Utilisation des poudres selon la revendication 1 comme additifs pour lubrifiants.

## Patentansprüche

1. Polyamid-Imidpulver, die aus nicht schmelzbaren, unlöslichen und kugelähnlichen Körnern, deren mittlerer Durchmesser zwischen 2 und 40 µm beträgt, zusammengesetzt sind, und die aus der Reaktion im Laufe der anionischen Polymerisation mindestens eines Lactams von Polyamid oder Copolyamid mit Molekulargewichten, die gleich oder größer als 200 sind und einem Polyisocyanat in einer solchen Menge, daß die Anzahl der vorhandenen NCO-Gruppen mindestens 20 auf 100 Lactammoleküle beträgt.

2. Verfahren zur Herstellung von Pulvern nach Anspruch 1 bestehend in der anionischen Polymerisation des gelösten Lactams in Gegenwart eines Polymerisationskatalysators und eines Polyisocyanats, dadurch gekennzeichnet, daß im Verlauf der Polymerisation mindestens eines Lactams das Polyisocyanat, das mit dem gebildeten Polyamid oder Copolyamid mit einem Molekulargewicht, das gleich oder größer als 200 ist, in einer solchen Menge reagiert, daß die Zahl der vorhandenen NCO-Gruppen mindestens 20 auf 100 Lactammoleküle beträgt.

3. Verfahren nach Anspruch 2, dadurch gekennzeichnet, daß der Lösung des Lactams eine fein verteilte Mineralmenge zugesetzt wird.

4. Verfahren nach Anspruch 3, dadurch gekennzeichnet, daß der Lösung des Lactams eine Mineralmenge im Verhältnis von 0,1 bis 1 Gewichtsteile auf 100 von Lactam zugegeben wird.

5. Verfahren nach Anspruch 4, dadurch gekennzeichnet, daß die Lösung des Lactams mikronisiertes Siliciumdioxid im Verhältnis von mindestens 4 Gewichtsteilen auf 100 von Lactam zugegeben wird.

6. Verfahren nach einem der Ansprüche 2 bis 5, dadurch gekennzeichnet, daß der Lactamlösung ein N,N'-Alkylen-bis(amid) zugegeben wird.

7. Verfahren nach einem der Ansprüche 2 bis 6, dadurch gekennzeichnet, daß das Polyisocyanat aus der das 1,6-Hexamethylendiisocyanat und das 2,4,4-Trimethyl-1,6-hexymethylendiisocyanat umfassenden Gruppe ausgewählt wird.

8. Verfahren nach einem der Ansprüche 2 bis 7, dadurch gekennzeichnet, daß das oder die Lactame aus der das Caprolactam und das Lauryllactam umfassenden Gruppe ausgewählt werden.

9. Verwendung der Pulver nach Anspruch 1 als Additive zu Schmiermitteln.

## Claims

1. Polyamideimide powders consisting of nonfusible, insoluble particles of spheroidal shape whose average diameter is between 2 and 40 µm and resulting from the reaction, in the course of the anionic polymerization of at least one lactam, of polyamide or copolyamide of molecular weight equal to or higher than 200 and of polyisocyanate in such quantity that the number of NCO groups contributed is at least 20 per 100 molecules of lactam.

2. Process for the manufacture of the powders according to Claim 1, consisting in polymerizing anionically lactam in solution in the presence of polymerization catalyst and of polyisocyanate, characterized in that in the course of polymerization of at least one lactam, the polyisocyanate which reacts with the polyamide or the copolyamide formed of molecular weight equal to or higher than 200 is in such

quantity that the number of NCO groups contributed is at least 20 per 100 molecules of lactam.

3. Process according to Claim 2, characterized in that a finely divided inorganic filler is added to the lactam solution.

4. Process according to Claim 3, characterized in that an inorganic filler is added to the lactam solution in a proportion of 0.1 to 1 part by weight per 100 of lactam.

5. Process according to Claim 4, characterized in that micronized silica is added to the lactam solution in a proportion of at least 4 parts by weight per hundred of lactam.

6. Process according to one of Claims 2 to 5, characterized in that an N,N'-alkylene bisamide is added to the lactam solution.

7. Process according to one of Claims 2 to 6, characterized in that the polyisocyanate is chosen from the group comprising 1,6-hexamethylene diisocyanate and 2,4,4-trimethyl-1,6-hexamethylene diisocyanate.

8. Process according to one of Claims 2 to 7, characterized in that the lactam(s) is (are) chosen from the group comprising caprolactam and lauryllactam.

9. Use of the powders according to Claim 1 as additives for lubricants.